# EUROPÄISCHE PATENTANMELDUNG

(11) **EP 3 053 636 A1**
(43) Veröffentlichungstag der Anmeldung: **10.08.2016**
(21) Anmeldenummer: 16153690.9
(22) Anmeldetag: 01.02.2016
(51) Int. Cl.: B01D 33/04, B01D 33/048, B01D 33/056, B01D 33/333, B01D 33/76, C02F 11/12

(54) **FÖRDERBAND-FILTEREINRICHTUNG**

(30) Priorität: 06.02.2015 DE 102015001411
(71) Anmelder: Frankenberger, Guido, 35578 Wetzlar (DE)
(72) Erfinder: Frankenberger, Guido, 35578 Wetzlar (DE)
(74) Vertreter: advotec.

(57) **Zusammenfassung**

Die Erfindung betrifft eine Förderband-Filtereinrichtung sowie eine Kanalreinigungsanordnung mit einer Förderband-Filtereinrichtung zur mechanischen Reinigung einer in einem Kanal (15) strömenden, mit Feststoffen verunreinigten Flüssigkeit (17) mit einem endlosen Filterband (11) aus miteinander verbundenen, gegeneinander verschwenkbaren flächigen Filterelementen (30) und einem flexiblen Antriebsmittel und einem Rahmengestell mit einem unteren Gestellteil (20) zur Ausbildung einer unteren Filterbandförderstrecke (32) innerhalb des Kanals (15) und einem oberen Gestellteil (21) zur Ausbildung einer oberen Filterbandförderstrecke (33) außerhalb des Kanals, wobei der obere Gestellteil im Bereich der oberen Umlenkeinrichtung eine Feststoffentnahmeeinrichtung (27) zur Entfernung von an den Filterelementen anhaftenden Feststoffen aufweist, wobei die obere Filterbandförderstrecke gegenüber der unteren Filterbandförderstrecke unter einem Neigungswinkel α angeordnet ist.

## Beschreibung

Die vorliegende Erfindung betrifft eine Förderband-Filtereinrichtung gemäß dem Oberbegriff des Anspruchs 1 sowie eine Kanalreinigungsanordnung mit einer derartigen Förderband-Filtereinrichtung.

Förderband-Filtereinrichtungen werden zur mechanischen Reinigung einer in einem Kanal strömenden, mit Feststoffen verunreinigten Flüssigkeit eingesetzt und weisen ein endloses Filterband aus miteinander verbundenen, gegeneinander verschwenkbaren flächigen Filterelementen und ein flexibles Antriebsmittel auf, das über an eine untere Umlenkeinrichtung und zumindest eine obere Umlenkeinrichtung geführt ist, sowie ein Rahmengestell, dass die Umlenkeinrichtungen und das Filterband trägt.

Förderband-Filtereinrichtungen der eingangs genannten Art werden auch als so genannte "Paternoster-Filterrechen" bezeichnet und dienen vor allem zur mechanischen Reinigung strömender Abwässer in hierzu ausgebildeten Kanälen. Die Filterelemente werden von dem Abwasser quer oder auch in Längsrichtung der Filterelemente durchströmt und tragen das Filtergut, welches die Filterelemente nicht passieren kann, aus dem Kanal aus.

Im Bereich einer oberen, oberhalb des Abwasserspiegels angeordneten Umlenkeinrichtung des Filterbands ist eine beispielsweise als rotierende Bürste ausgeführte Abstreifeinrichtung einer Feststoffentnahmeeinrichtung vorgesehen, die in einem Abstreifvorgang an den Filterelementen anhaftendes Filtergut von den Filterelementen entfernt, bevor diese infolge des Umlaufs des Filterbands wieder in die durch den Kanal strömende Flüssigkeit eintauchen.

Der vorliegenden Erfindung liegt die Aufgabe zugrunde, die Effektivität einer Förderband-Filtereinrichtung bei gleichzeitig möglichst kompakter Ausgestaltung der Förderband-Filtereinrichtung zu erhöhen.

Diese Aufgabe wird durch eine Förderband-Filtereinrichtung mit den Merkmalen des Anspruchs 1 und eine Kanalreinigungsanordnung mit den Merkmalen des Anspruchs 4 gelöst.

Weitere vorteilhafte Ausführungsformen sind Gegenstand der Unteransprüche.

Besonders vorteilhaft ist es, wenn der obere Gestellteil mit einer Hubeinrichtung versehen ist zur Veränderung des Abstands des Umlenkabschnitts des Rahmengestells gegenüber der Kanalsohle oder Einstellung des Anströmwinkels.

Nachfolgend wird eine bevorzugte Ausführungsform der Erfindung anhand der Zeichnung näher erläutert. Es zeigen:
- **Fig. 1**: eine Kanalreinigungsanordnung mit einer Förderband-Filtereinrichtung in Seitenansicht;
- **Fig. 2**: die in **Fig.1** dargestellte Förderband-Filtereinrichtung in Draufsicht;
- **Fig.3**: einen Umlenkabschnitt der Förderband-Filtereinrichtung gemäß Ansicht III in **Fig.2****.**

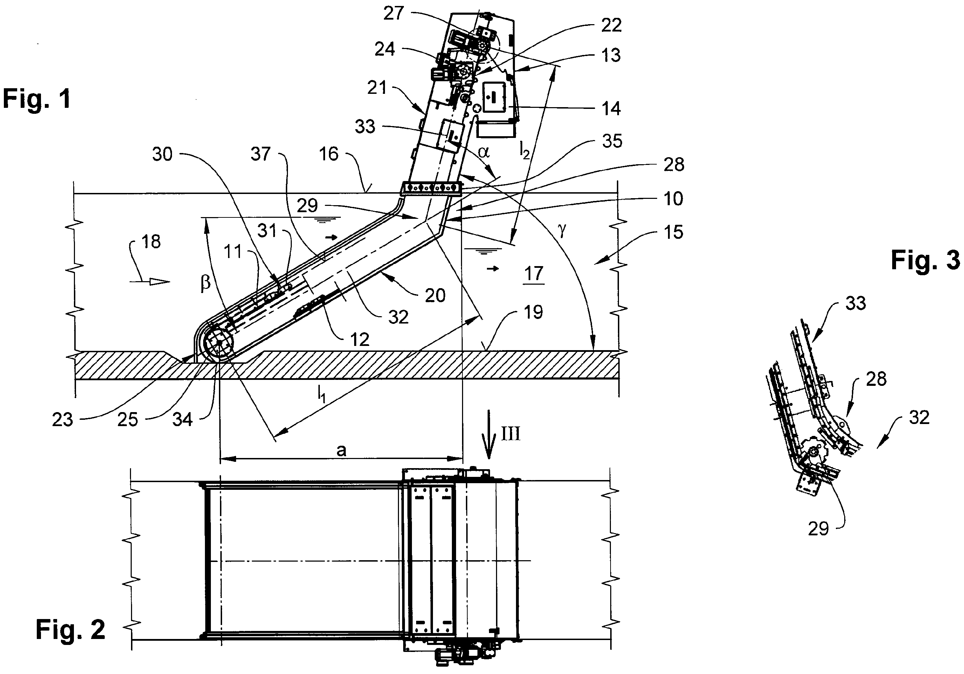

Die in **Fig. 1** dargestellte Förderband-Filtereinrichtung weist ein Rahmengestell 10, ein an dem Rahmengestell 10 geführtes Filterband 11, einen mit dem Rahmengestell 10 und dem Filterband 11 verbundenen Kettentrieb 12 und eine Filtergutabförderung 13 mit einem Abwurfkanal 14 auf. Die Förderband-Filtereinrichtung dient zur Reinigung eines Kanals 15, der sich unterhalb eines Installations-Niveaus 16 der Förderband-Filtereinrichtung erstreckt. Hierzu ist das Filterband 11 mit Filterelementen 30 versehen. Die im vorliegenden Fall eine aus gelochtem Blech gebildete, gewölbte Filterwand 31 aufweisen.

Der Kanal 15 wird von einer mit Feststoffen beladenen Flüssigkeit 17 durchströmt in einer durch einen Richtungspfeil veranschaulichten Strömungsrichtung 18, wobei sich der Kanal 15 senkrecht zur Papierebene in einer erheblichen Breite erstrecken kann. Die Förderband-Filtereinrichtung reicht bis zu einer Kanalsohle 19, so dass der gesamte Strömungsquerschnitt des Kanals 15 quer zur Strömungsrichtung 18 so abgesperrt ist und die Flüssigkeit 17 den im Kanal 15 befindlichen Teil der Förderband-Filtereinrichtung passieren muss.

Das Rahmengestell 10 besteht aus einem unteren Gestellteil 20, der den von der Flüssigkeit 17 zu passierenden Teil bildet, und einen oberen Gestellteil 21, der sich größtenteils außerhalb des Kanals 15 erstreckt und an seinem oberen Ende eine obere Umlenkeinrichtung 22 aufweist, die eine obere Umlenkwelle 24 aufweist, welche zusammen mit einer unteren Umlenkwelle 25 einer unteren Umlenkeinrichtung 23, die am unteren Ende des innerhalb der Flüssigkeit 17 angeordneten unteren Gestellteils 20 angeordnet ist, einen Umlauf des Filterbands 11 ermöglicht. In einem im Übergang vom unteren Gestellteil 20 zum oberen Gestellteil 21 ausgebildeten Umlenkabschnitt ist der obere Gestellteil 21 gegenüber dem munteren Gestellteil 20 um einen Neigungswinkel α abgewinkelt, derart, dass eine obere Filterbandförderstrecke 32 gegenüber einer unteren Filterbandförderstrecke 33 unter dem Neigungswinkel α angeordnet ist. Zur Umlenkung des Filterbands weist der Umlenkabschnitt 28 eine insbesondere in **Fig. 3** dargestellte Umlenkeinrichtung 29 auf.

Wie insbesondere die **Fig. 1** zeigt, ist am oberen Ende des oberen Gestellteils 21 als Bestandteil der Filtergutabförderung 13 eine hier als rotierende Abstreifeinrichtung ausgebildete Feststoffentnahmeeinrichtung 27 vorgesehen, die Feststoffe von den Filterelementen 30 abstreift und durch den Abwurfkanal 14 an eine hier nicht näher dargestellte Feststoffaufnahmeeinrichtung überführt.

Wie **Fig. 1** zeigt ermöglicht die Förderband-Filtereinrichtung die Ausbildung einer Kanalreinigungsanordnung, bei der sich der untere Gestellteil 20 im Bereich der unteren Umlenkeinrichtung 23 mit einer Gestellbasis 34 auf der Kanalsohle 19 des Kanals 15 abstützt und der obere Gestellteil 21 mit einer Gestellbasis 35 auf der Installationsebene 16 außerhalb des Kanals 15 montiert ist, derart, dass der Abstand a zwischen der unteren Umlenkeinrichtung 23 und der oberen Umlenkeinrichtung 22 kleiner ist als die Länge 1 einer aus der unteren Filterbandförderstrecke 33 mit der Länge 11 und der oberen Filterbandförderstrecke 32 mit der Länge 12 zusammengesetzten Gesamtförderstrecke 36. Hieraus ergibt sich trotz eines relativ flachen Anströmwinkels α des Filterbands 11 und der daraus resultierenden großen effektiven Filterfläche 37 eine kompakte Installation der Förderband-Filtereinrichtung oberhalb des Kanals 15.

## Patentansprüche

1. Förderband-Filtereinrichtung zur mechanischen Reinigung einer in einem Kanal (15) strömenden, mit Feststoffen verunreinigten Flüssigkeit (17) mit einem endlosen Filterband (11) aus miteinander verbundenen, gegeneinander verschwenkbaren flächigen Filterelementen (30) und einem flexiblen Antriebsmittel, das über eine untere Umlenkeinrichtung (48) und zumindest eine obere Umlenkeinrichtung (22) geführt ist, sowie einem Rahmengestell (10), dass die Umlenkeinrichtungen und das Filterband trägt, wobei das Rahmengestell einen unteren Gestellteil (20) zur Ausbildung einer unteren Filterbandförderstrecke (32) innerhalb des Kanals (15) und einen oberen Gestellteil (21) zur Ausbildung einer oberen Filterbandförderstrecke (33) außerhalb des Kanals aufweist, wobei der obere Gestellteil im Bereich der oberen Umlenkeinrichtung eine Feststoffentnahmeeinrichtung (27) zur Entfernung von an den Filterelementen anhaftenden Feststoffen aufweist,
**dadurch gekennzeichnet,**
**dass** die obere Filterbandförderstrecke gegenüber der unteren Filterbandförderstrecke unter einem Neigungswinkel α angeordnet ist.

2. Förderband-Filtereinrichtung nach Anspruch 1,
**dadurch gekennzeichnet,**
**dass** im Übergang zwischen der unteren Filterbandförderstrecke (32) und der oberen Filterbandförderstrecke (33) zur Ausbildung des Neigungswinkels α an einem Umlenkabschnitt (28) des Rahmengestells (10) eine Umlenkeinrichtung (29) angeordnet ist.

3. Förderband-Filtereinrichtung nach Anspruch 2,
**dadurch gekennzeichnet,**
**dass** der obere Gestellteil (21) zur Einstellung des Neigungswinkels α gegenüber dem unteren Gestellteil (20) verschwenkbar ist.

4. Kanalreinigungsanordnung mit einer Förderband-Filtereinrichtung nach einem der vorangehenden Ansprüche,
**dadurch gekennzeichnet,**
**dass** sich der untere Gestellteil (20) im Bereich der unteren Umlenkeinrichtung (23) mit einer Gestellbasis (34) auf einer Kanalsohle (19) des Kanals (15) abstützt und der obere Gestellteil (21) mit einer Gestellbasis (35) auf einer Installationsebene (16) außerhalb des Kanals montiert ist, derart, dass der Abstand a zwischen der unteren und der oberen Umlenkeinrichtung (23, 22) kleiner ist als die Länge 1 der aus der unteren Filterbandförderstrecke (32) mit der länge 11 und der oberen Filterbandförderstrecke (33) mit der Länge 12 zusammengesetzten Gesamtförderstrecke (36).

5. Kanalreinigungsanordnung nach Anspruch 4,
**dadurch gekennzeichnet,**
**dass** die untere Filterbandförderstrecke (32) unter einem Anströmwinkel β zwischen 15° und 45° gegenüber der Kanalsohle (19) und die obere Filterbandförderstrecke (33) unter einem Installationswinkel γ gleich β plus α gegenüber der Kanalsohle auf der Installationsebene (16) angeordnet ist.

6. Kanalreinigungsanordnung nach Anspruch 5,
**dadurch gekennzeichnet,**
**dass** der Anströmwinkel β zwischen 25° und 30° beträgt.

7. Kanalreinigungsanordnung nach einem der Ansprüche 4 bis 6,
**dadurch gekennzeichnet,**
**dass** der Umlenkabschnitt (28) des Rahmengestells (10) im Bereich einer Kanaloberkante angeordnet ist.

8. Kanalreinigungsanordnung nach einem der Ansprüche 4 bis 7,
**dadurch gekennzeichnet,**
**dass** das Rahmengestell (10) im Bereich des Umlenkabschnitts (28) mit einer Abstützeinrichtung zur Abstützung des Rahmengestells an einer Kanalwandung oder der Installationsebene versehen ist.

9. Kanalreinigungsanordnung nach einem der Ansprüche 4 bis 8,
**dadurch gekennzeichnet,**
**dass** der obere Gestellteil (21) mit einer Hubeinrichtung versehen ist zur Veränderung des Abstands des Umlenkabschnitts (28) des Rahmengestells(10) gegenüber der Kanalsohle (19).
